Europäisches Patentamt

European Patent Office

Office européen des brevets

(19)

(11) Publication number: **0 192 917 B1**

# EUROPEAN PATENT SPECIFICATION

(45) Date of publication of patent specification: **15.05.91**     (51) Int. Cl.⁵: **A01B 21/08**

(21) Application number: **85850065.5**

(22) Date of filing: **28.02.85**

(54) **Arrangement in agricultural disk implements.**

(43) Date of publication of application:
**03.09.86 Bulletin 86/36**

(45) Publication of the grant of the patent:
**15.05.91 Bulletin 91/20**

(84) Designated Contracting States:
**AT BE CH DE FR GB IT LI NL SE**

(56) References cited:
| US-A- 2 239 948 | US-A- 2 264 783 |
| US-A- 2 663 132 | US-A- 2 897 905 |
| US-A- 3 181 621 | US-A- 3 630 291 |

(73) Proprietor: **VÄDERSTADVERKEN AB
Box 85
S-59021 Väderstad(SE)**

(72) Inventor: **Gilstring, Gert
Nybble
S-590 21 Väderstad(SE)**

(74) Representative: **Lindblad, Sture
FAMTEC Box 7574
S-103 93 Stockholm(SE)**

## Description

The present invention relates to an arrangement in disk implements such as harrows with two or more section frames arranged side by side, and including at least two forward and at least two rear laterally arranged disk carrying shafts each being rotatably carried by a shaft beam being settable such that the disk shafts by swinging or pivoting in a horizontal plane can be given a forward angle or a rearward angle in relation to the travelling direction whereat the forward shafts of each section are arranged for common setting to the same mutually equal first angle setting and the rear shafts of each section are arranged for common setting to the same mutually equal second angle setting relative the travelling direction under the actuation of power means arranged on the implement and comprising a hydraulic cylinder connected to the hydraulic system of the tractor towing the implement.

The disk shafts are carried rotatably at the lower end of legs, the upper ends of which are connected to a shaft beam carrying the disk shaft, this beam being in turn settable in relation to the section frame carrying it such that by pivoting in a horizontal plane the disk shafts may be given an angle forwards or backwards in relation to the direction of travel.

The operating conditions of a disk are affected by the setting angle, which affects both the tendency of the disk to roll up out of the soil and its downwardly directed soil-seeking force and ability to penetrate down into the soil, as well as its ability to turn the soil over well.

A disk implement is used to work the stubble on a field for finely dividing and working harvest residue into the soil and for combating weeds or preparing the soil for sowing. Such operations can be carried out on different types of soil, such as clay, sand or peat soils, which have varying moisture and hardness. A given setting angle provides optimum operation for a given set of circumstances. For this reason the disk shafts are settable in the horizontal plane to different angles in relation to the frame.

In known implements the angular setting is obtained by movable clamps which bolt down the shaft beam to the frame.

When the working angle of the disks is to be reset in such an implement, a plurality of clamps must be loosened and moved, to be tightened once again for fixing the shaft at a desired angle. This results in time-consuming manual work and the use of the necessary tools.

In a known development of the disk implement the angle is settable with the aid of a lever. In this type of implement, a means locking the lever must be released, after which the angle of one or two disk shafts may be reset manually, the lever once again having to be locked in its new position. This procedure also requires manual work, although to a less extent than in the previously described arrangement with bolted clamps.

In special circumstances with disk implements having several disk shafts arranged one after the other, it may also be desirable to set the shafts to different angles, e.g. such that the rear disks have a greater or less angle than the ones in front.

Disk implements are also known from US-A-2,264,783, US-A-3,630,291 and US-A-3,181,621.

US-A-2,264,783 teaches an implement with manually operated means for setting the angles of the disks and the disk units are interconnected by rods and hinged to a mean frame at one end only.

US-A-3,630,291 teaches an implement with manually operated screws for individually setting of the angles of the forward and the rear disk units.

US-A-3,181,621 teaches an implement mainly of the same construction as the first mentioned implement hereabove. However this implement has hydraulic means for setting the angles of the disk units.

In disk implements of the various constructions described there are different disadvantages in resetting the angles of the disk units and to coordinate front and rear disk units.

Such disadvantages are mitigated and a series of further advantages is obtained by the invention in that each frame is stiff and hinged to adjacent frame or frames on axes pointing in the travelling direction of the implement, that the power means comprises at least one hydraulic cylinder on each section, and that the cylinders are hydraulically interconnected in series such that they simultaneously give all the forward and all the rear disk carrying shafts their predetermined settings.

In a second embodiment of the invention, for the angle setting, the shaft beam has one end pivotable about a pivot joint fixed to the section frame and is carried at its other end by a sliding bearing slidable along an arcuately formed portion of the frame.

In a third embodiment of the invention the hydraulic cylinders have connecting power lines to the tractor, the enabling and disabling of said lines being controlled by an operating means in the cabin of the tractor towing the implement.

The invention will now be described in detail and with reference to the accompanying drawings where

Figure 1 is a view from above of a disk implement with a middle section having a pair of forward and a pair of rear disk shafts, each pair being set by its power means in the form of a hydraulic cylinder,

Figure 2 illustrates another embodiment of the invention where the two power means in the embodiment according to Figure 1 have been combined to a single hydraulic cylinder,

Figure 3 illustrates an embodiment in a disk implement with a middle section and two outer sections,

Figure 4 illustrates in more detail the implementation of the angle setting means for a shaft beam in connection with Figures 1 and 2,

Figure 5 illustrates the corresponding setting means as in Figure 4 for the rear shaft beam of the left-hand side section in the embodiment illustrated in Figure 3,

Figures 6 and 7 illustrate further angle setting means for a shaft beam.

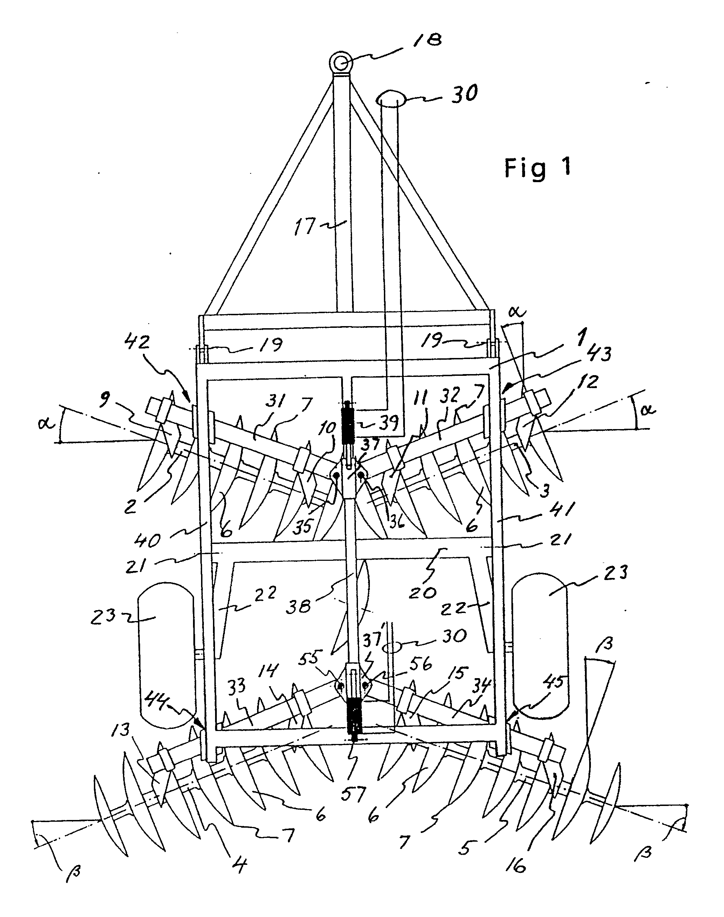

In Figure 1 a section frame is denoted by 1, and to it there are attached two forward disk shafts 2 and 3 and two rear disk shafts 4 and 5, the shafts 2-5 carrying a plurality of disks 6 with a substantially circular edge 7. Close to their ends the shafts 2-5 are rotatably carried by the lower ends of legs 9-16, which are connected in pairs to carrying beams or shaft beams, of which the forward shaft beams 31 and 32 carry the legs 9, 10 and 11, 12, respectively, while the rear shaft beams 33 and 34 carry the legs 13, 14 and 15, 16, respectively. At its inner end the shaft beam 31 is pivotably connected to a slide 37 via a pivot pin 35. In a corresponding manner the shaft beam 32 is connected to the slide 37 with the aid of a pivot pin 36 at its inner end. The slide 37 slides on a central beam 38 of the section frame 1 on actuation from a hydraulic cylinder 39 with connecting power lines 30. A slide box 42 is arranged on the lefthand side beam or stringer 40, the box being described in detail below. A slide box 43 is arranged in a corresponding way on the right stringer 41 of the frame 1. The shaft beams 31 and 32 slide displaceably and pivotably through these slide boxes when the hydraulic cylinder 39 displaces the slide 37 along the central beam 38.

In Figure 1 the disks 6 have their concave sides facing outwards and the shafts 2, 3 are turned forwards an angle $\alpha$ so that the concave sides of the disks 6 can cut down into, and work the soil.

A further slide 37' is arranged slidable along the central beam 38 at its rear portion, this slide having pivot pins 55,56 on which the respective inner ends of the shaft beams 33 and 34 are pivotably mounted. The outer portions of the shaft beams 33, 34 are slidably and pivotably mounted in slide boxes 44 and 45. In the Figures, the rear disk shafts 4, 5 are swung backwards an angle $\beta$. This angle can be altered by displacing the slide 37' along the central beam 38 with the aid of a hydraulic cylinder 57.

In Figure 1 there is also shown the towing bar 17 with its eye 18, which are intended for connecting to a tractor for moving the disk implement. Via joints 19 the bar 17 is connected to the frame 1 such that the disk implement can perform swinging movements upwards and downwards for adjusting to the unevenness of the ground. The Figure also illustrates a wheel-carrying beam 20, which is pivotable about joints 21 so that arms 22 on the beam can pivot upwards and downwards, thus allowing transport wheels 23 to be lowered for lifting the implement for transport, e.g. on a road.

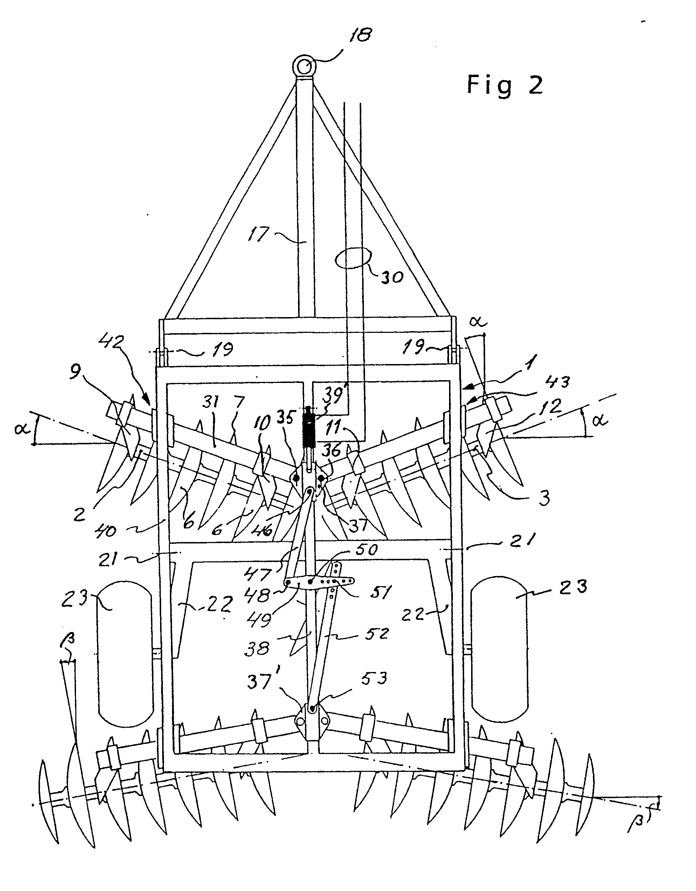

Figure 2 illustrates a disk implement of substantially the same embodiment as in Figure 1. However, the two hydraulic cylinders 39 and 57 in Figure 1 have been combined into a single forward cylinder 39'. The forward and rear disk shafts are connected to each other by connection means 46-53. A pin on the forward slide 37 is denoted by 46. The pin 46 pivotably carries one end of a link 47, the other end of which is pivotably carried by a lever pin 48 mounted on a lever 49 pivoting about a fulcrum pin 50. The other end of the lever 49 has a lever pin 51, pivotably connected to one end of a link 52, the other end of the link 52 is pivotably mounted on the pin 53 on the rear slide 37'. When the hydraulic cylinder 39 displaces the forward slide 37, the rear slide 37' will also be displaced via the connecting means 46-53. The relative displacement of the slides 37 and 37', along the central beam 38 depends on the gear mechanism ratio of the operating system. The ratio can be altered by rearranging the pins 48,51 and the fulcrum pin 50 in any of the holes which are disposed e.g. along the lever 49 and the link 52, when the lever 49, links 47 and 52 are articulately connected to each other. The forward disk shafts are set to an angle $\alpha$ forwards, while the rear disk shafts are set to a substantially less angle $\beta$ backwards. There is thus enabled good working and breaking up of the soil. To achieve this it is also possible to provide the rear pair of disk shafts 4, 5 with more disks 6 than the number of disks on the forward disk shafts 2, 3. It is, of course, also possible to implement the connection means such that the angles $\alpha$ and $\beta$ are alike.

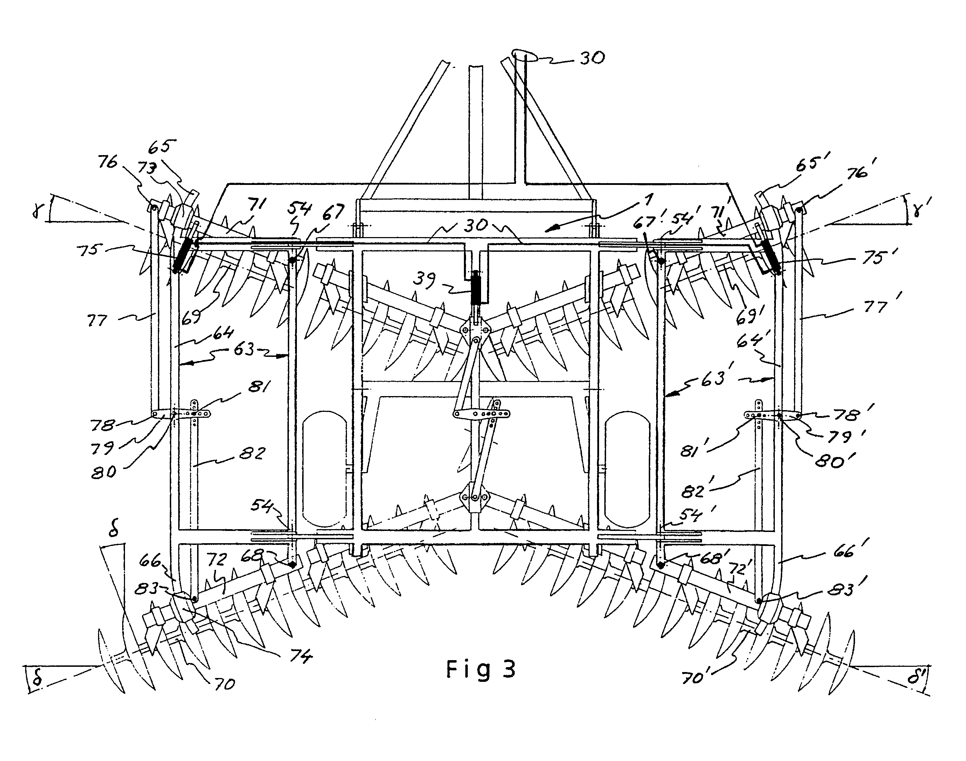

Figure 3 illustrates a disk implement with a central section 1 substantially implemented as described above in conjunction with Figure 2. On either side of the central section there are two side sections 63 and 63', these sections being pivotably connected to the central section by pivot joints 54 and 54' with their pivoting axes parallel to the direction of travel, about which joints the side sections can be swung between a working position illustrated in the Figure and a retracted position for transport.

One side section is made to the opposite hand of the other. Corresponding details have the same denotation, although for the righthand section they have been provided with a prim sign, thus making it necessary to describe only one side section, for which purpose the lefthand side section 63 has been chosen.

The side section 63 has an outer beam or stringer 64, the forward end 65 and rear end 66 of which are arcuate, with their centres of curvature at a forward pivot joint 67 and a rear pivot joint 68, respectively. The pivot joints 67 and 68 carry the inner end of a forward shaft beam 71 and a rear shaft beam 72, respectively. The end portions of the shaft beams are connected to slide boxes 73 and 74, respectively, which slide along the respective arcuate beam ends 65 and 66. The forward side section shaft 69 is set forwards an angle $\gamma$ with the aid of a hydraulic cylinder 75. The setting movement for the forward shaft beam 71 is transferred to the rear shaft beam 72 with the aid of a pivot pin 76 on the shaft beam 71, and a link 77 pivoting on a pivot pin 78 on a lever 79 pivoting about its fulcrum pin 80. A pivot pin 81 on the other end of the lever 79 and a link 82 transmit the movement to a pin 83 on the shaft beam 72 such that the beam pivots about the pivot joint 68 for setting the disk shaft 70 in a backwardly directed angle $\delta$. The angle settings $\gamma$ and $\delta$ can be made dependent of each other in the same way as described above concerning the angle settings $\alpha$ and $\beta$.

In an embodiment of the invention the three hydraulic cylinders 39, 75 and 75' are connected together by hydraulic lines, there thus being created the option of setting the angles $\alpha,\beta,\gamma,\gamma',\delta$ and $\delta'$ in a desired relationship to each other.

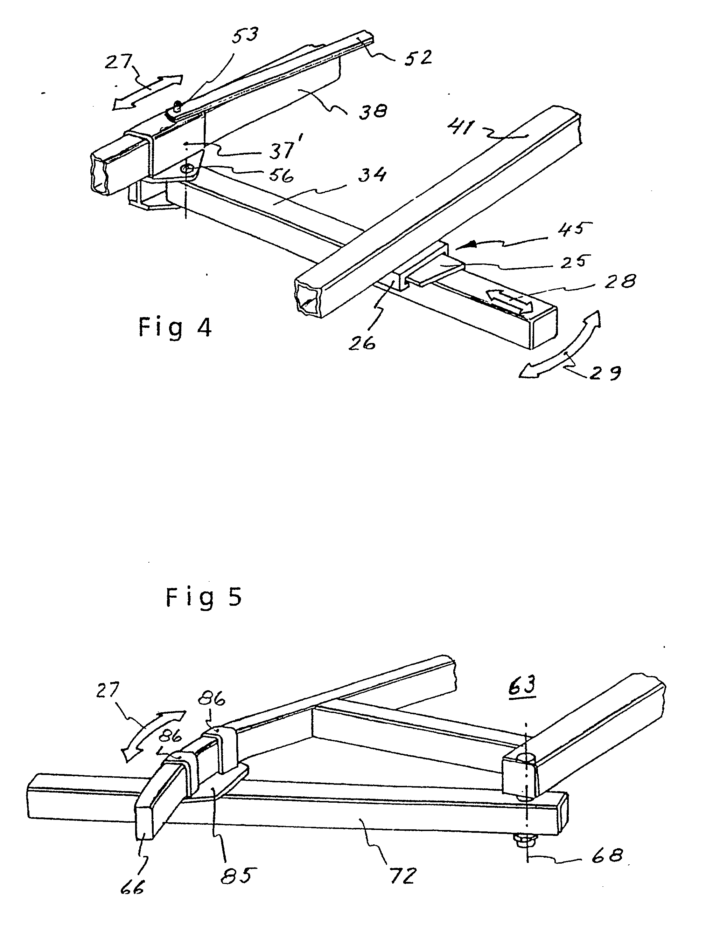

Figure 4 illustrates in more detail the embodiment of the arrangement for the angular setting of the right rear shaft beam 34 in Fig. 2. The denotations used refer to the same details as described above. It will be seen from the Figure that the slide 37' may be displaced as indicated by the double arrow 27 along the central beam 38 by the hydraulic cylinder 39 with the aid of the link 52 and pin 53. The inner end of the shaft beam 34 pivots about the pivot pin 56 when the slide 37' is displaced. A guide plate 25 is welded on top of the beam 34 adjacent its outer end, this plate projecting out laterally from the beam 34. The guide plate 25 is displaced mainly axially according to the arrow 28 and arcuately according to the arrow 29. This is enabled by the guide plate 25 being accommodated with suitable clearance in a housing or slide box 45. The box is welded to the section frame member 41 and along the edges the box has flanges 26 extending under the guide plate 25. Details 25 and 26 are the main parts of the slide box 45. The flanges 26 also serve to take up in the slide box 45 the forces from the disks which attempt to turn the shaft beam 34 about its longitudinal axis.

The shaft beams 31, 32 and 33 are given their angular settings $\alpha$ and $\beta$ in the corresponding way.

Figure 5 illustrates in more detail the execution of the rear portion of the left side section 63. The numeral 66 denotes the rear arcuate beam end with its centre of curvature at the pivot joint 68. Vertical and torsional forces between the beam end 66 and the shaft beam 72 are taken up by a slide plate 85 which is rigidly connected by U-shaped fastenings 86 to the beam 72. Both fastenings 86 may be displaced along the curved beam end 66 with a given clearance. For the sake of simplicity, the link 82 and pin 83 shown in Figure 3 are excluded from this Figure.

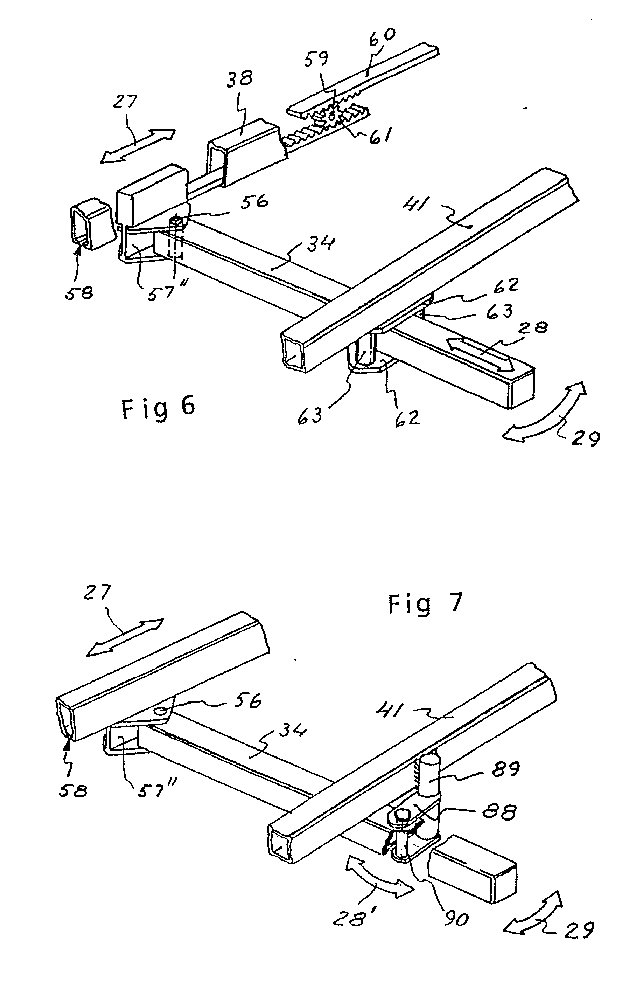

Figure 6 illustrates an embodiment with another configuration of the connection means for setting the angles of the disk shafts. Further to previously used denotations, 57" denotes a slide which partially runs inside, and is guided by, the hollow central beam 38, which has on its underside a longitudinal slot 58 for accommodating the slide 57". The slide is provided with flanges for fastening pins 55 and 56 to their respective beams 33 and 34, of which only the pin 56 and beam 34 are illustrated.

The displacement 27 of the slide 57" is achieved by a rear rack 61 fixed to the slide, via a pinion 59 (mounted in beam 38), the rack 61 is connected to a forward rack 60, being attached to the forward slide 37, the displacement of which provides the setting angle $\alpha$ for the forward disk shafts 2, 3. In the configuration illustrated by the Figure, the hydraulic cylinder 39 can actuate the forward slide 37 in the same way as before, or a rotary motor may drive the pinion 59. The advantage with the configuration illustrated in the Figure is that the connection means and their moving parts are situated well protected inside the hollow, slotted central beam 38.

Figure 6 also illustrates another embodiment of the slide box. In this case the box comprises upper and lower slide plates 62 arranged on either side of the shaft beam 34, which is guided vertically between the plates and by means extending between the plates. The means are either rollers or rounded abutments 63 disposed with clearance on the forward and rear sides of the beam 34, the means thus taking up forces from the disk shafts in the direction of travel, i.e. both compression and torsional forces from the shaft beam.

The arrangement illustrated in Figure 6 can also be modified such that the single pinion 59 is replaced by two mutually joined pinions on the same shaft but with different diameters, each pinion coacting with its respective rack 60, 61, thus providing different setting angles for the forward and rear shafts.

A still further embodiment of the connection between the shaft beam 34 and the section frame is illustrated in Figure 7. In this case the slide box has been replaced by a pivot pin 89 welded to the side stringer 41 of the section, one end of a link 88 being pivotably mounted on the pin 89. The link 88 is double, with one plate on the upper side of the beam 34 and the other on the underside thereof. A pivot pin 90 passes through the outer portions of the plates of the link 88 and through the beam 34 to form a pivot joint between the link 88 and the shaft beam 34. The outer end of the beam 34 can thus execute pivoting and displacing movements as indicated by the double arrows 29 and 28', respectively, caused by displacement 27.

A very flexible, effective and easily manageable disk implement is thus provided by the invention, which may be readily suited to different types of soil. By using hydraulic cylinders 39, 75, 75', controlled from the driver's cabin via the power lines 30, for setting the angles of the disk shafts, these angles may even be set without having to stop the tractor and implement, which is, of course, and advantage if areas with varying soil properties are encountered during the course of work.

The invention may also be applied to a disk implement, constructed from two side sections of the type denoted by 63 and 63' in Figure 3. These sections may be connected, for swinging upwards, to a centre section which has a tow bar corresponding to 17, 18 in Figure 1, as well as an arrangement with transport wheels corresponding to 20-23 in Figure 1, but otherwise lacking disks for working the earth.

## Claims

1. Apparatus in disk implements with two or more section frames arranged side by side, and including at least two forward (2, 3, 69, 69') and at least two rear (4, 5, 70, 70') laterally arranged disk carrying shafts each being rotatably carried by a shaft beam (31, 32, 71, 71', 72, 72') being settable such that the disk shafts by swinging or pivoting in a horizontal plane can be given a forward angle ($\alpha$, $\gamma$) or a rearward angle ($\beta$, $\delta$) in relation to the travelling direction whereat the forward shafts of each section are arranged for common setting to the same mutually equal first angle setting ($\alpha$, $\gamma$, $\gamma'$) and the rear shafts of each section are arranged for common setting to the same mutually equal second angle setting ($\beta$, $\delta$, $\delta'$) relative the travelling direction under the actuation of power means arranged on the implement and comprising a hydraulic cylinder (39, 75, 75'), connected (30) to the hydraulic system of the tractor towing the implement, **characterized** in that each frame (1, 63, 63') is stiff and hinged to adjacent frame or frames on axes (54, 54') pointing in the travelling direction of the implement, in that the power means comprises at least one hydraulic cylinder (39, 75, 75') on each section, and in that the cylinders are hydraulically interconnected (30', 30'') in series (75-39-75', Fig. 3) such that they simultaneously give all the forward (2, 3, 69, 69') and all the rear (4, 5, 70, 70') disk carrying shafts their predetermined settings ($\alpha$, $\gamma$, $\gamma'$ and $\beta$, $\delta$, $\delta'$ respectively).

2. Arrangement as claimed in claim 1, **characterized in** that for the angle setting ($\delta$) the shaft beam (72) has one end pivotable about a pivot joint (68) fixed to the section frame (63) and is carried at its other end by a sliding bearing (85, 86) slidable along an arcuately formed portion (65, 66) of the frame.

3. Arrangement as claimed in claim 1, **characterized in** that the hydraulic cylinders (39, 75, 75') have connecting power lines (30) to the tractor, the enabling and disabling of said lines being controlled by an operating means in the cabin of the tractor towing the implement.

## Revendications

1. Dispositif pour outils agricoles en forme de disque ayant deux ou plus châssis de sections arrangées côte a côte et comprenant au moins deux arbres des disques antérieurs (2, 3, 69, 69') et deux arbres des disques arrières (4, 5, 70, 70') arrangées en sens transversal, les arbres étant supportées rotativement par un poutre d'arbre (31, 32, 71, 71', 72, 72') réglable de façon que les arbres des disques, tournant ou pivotant au un plan horizontal peut être orientées au un angle anterieur ($\alpha$, $\gamma$) ou arrière ($\beta$, $\delta$) par rapport dans la direction de la route de travail, les arbres antérieures du chaque section étant arrangés pour orientation commune aux méme angle première ($\alpha'$ $\gamma$, $\gamma'$) mutualement analogue, et les arbres arrières du chaque section étant arrangées pour orientation commune au méme angle secondaire ($\beta$, $\delta$, $\delta'$) mutualement analogue, par rapport dans la direction de la route de travail par actuation d'un moyen de puissance arrangé dans le dispositif et comprenant un vérin hydraulique (39, 75, 75') associée (30) au système hydraulique du tracteur tirant le dispositif,

**charactérisé** en ce

que chaque châssis (1, 63, 63') est rigide et articulé au châssis ou aux châssis attenante par des boulons d'articulation (54, 54') pointant dans la direction de la route du travail du dispositif,

que le moyen de puissance comprenne au moins un vérin hydraulique (39, 75, 75') dans chaque section, et

que les vérins sont interalliée (30', 30") en serie (75-39-75', Fig.3) de la manière qu'ils donnent simultanément aux toutes les arbres anterieurs (2, 3, 69, 69') et toutes les arbres arriéres (4, 5, 70, 70') leurs positions predéterminées.

2. Dispositif selon la revendication 1, **charactérisé** en ce que, pour le déplacement d'angle (δ), l'un bout de la poutre (72) est pivotable sur un jointe d'articulation (68) fixée au châssis (63) du section, et que l'autre bout est supporté par une palier de glissement (85, 86) coulissant le long d'une partie (65, 66) du châssis qui a une forme courbé.

3. Dispositif selon la revendication 1, **charactérisé** en ce que les vérins hydrauliques (39, 75, 75') avons des conduites d'énergie (30) en communication avec le tracteur, l'engrènement et l'interruption des conduites étant controllées par une reglage d'operation dans la cabin du tracteur tirant le dispositif.

**Ansprüche**

1. Anordnung bei scheibenförmigen Schneidgeräten in der Landwirtschaft mit zwei oder mehr nebeneinander vorgesehenen Sektionsrahmen, mit wenigstens zwei vorderen (2, 3, 69, 69') und wenigstens zwei hinteren (4, 5, 70, 70') seitlich angebrachten Scheibenträgerschäften, die jeweils drehbar in einem Schaftträger (31, 32, 71, 71', 72, 72') gelagert und so einstellbar sind, daß die Scheibenträgerschäfte durch Schwingen oder Schwenken in einer horizontalen Ebene einen Winkel nach vorn (α, γ) oder nach hinten (β, δ) bezüglich der Fahrtrichtung angestellt werden können, wobei die vorderen Schäfte jeder Sektion zwecks gemeinsamer Einstellung auf denselben gegenseitig gleichen ersten Einstellwinkel (α, γ, γ') vorgesehen sind, während die hinteren Schäfte jeder Sektion zwecks gemeinsamer Einstellung auf denselben gegenseitig gleichen zweiten Einstellwinkel (β, δ, δ') bezüglich der Fahrtrichtung durch Beaufschlagung von am Arbeitsgerät angebrachten Kraftaggregaten vorgesehen sind und einen an die hydraulische Anlage des das Arbeitsgerät ziehenden Schleppers angeschlossenen (30) hydraulischen Zylinder (39, 75, 75') umfassen,

dadurch **gekennzeichnet**,

daß jeder Rahmen (1, 63, 63') starr und an dem oder den angrenzenden Rahmen auf in Fahrtrichtung des Arbeitgerätes gerichteten Schwenkachsen (54, 54') angelenkt ist,

daß die Kraftaggregate wenigstens einen hydraulischen Zylinder (39, 75, 75') in jeder Sektion aufweisen, und

daß die Zylinder hydraulisch so in Reihe (75-39-75', Fig.3) miteinander verbunden (30', 30") sind, daß sie gleichzeitig allen vorderen (2, 3, 69, 69') und allen hinteren (4, 5, 70 70') Scheibenträgershäften jeweils den vorgegebenen Einstellwinkel (α, γ, γ' und β, δ, δ') verleihen.

2. Anordnung nach Anspruch 1, dadurch **gekennzeichnet,** daß der Schaftträgwer (72) zur Winkeleinstellung (δ) ein um ein mit dem Sektionsrahmen (63) verbundenes Zapfengelenk (68) schwenkbares Ende aufweist und an seinem anderen Ende in einen Gleitlager (85, 86) abgestützt ist, das auf einem bogenförmigen Teil (65, 66) des Rahmens verschiebbar ist.

3. Anordnung nach Anspruch 1, dadurch **gekennzeichnet,** daß die hydraulische Zylinder (39, 75, 75') hydraulische Verbindungsleitungen (30) zum Schlepper aufweisen, deren Zu- und Abschaltung durch eine Betätigungsvorrichtung im Fahrerhaus des das Arbeitsgerät ziehenden Schleppers steuerbar ist.

Fig 1

Fig 2

Fig 3

Fig 4

Fig 5

Fig 6

Fig 7